(19) Europäisches Patentamt
European Patent Office
Office européen des brevets

(11) **EP 3 727 621 B1**

(12) **EUROPÄISCHE PATENTSCHRIFT**

(45) Veröffentlichungstag und Bekanntmachung des Hinweises auf die Patenterteilung:
**14.12.2022 Patentblatt 2022/50**

(21) Anmeldenummer: **18829185.0**

(22) Anmeldetag: **18.12.2018**

(51) Internationale Patentklassifikation (IPC):
**A63F 9/06** *(2006.01)* **A63F 9/08** *(2006.01)*

(52) Gemeinsame Patentklassifikation (CPC):
**A63F 9/0669; A63F 9/0803; A63F 9/088**

(86) Internationale Anmeldenummer:
**PCT/AT2018/060305**

(87) Internationale Veröffentlichungsnummer:
**WO 2019/119006 (27.06.2019 Gazette 2019/26)**

(54) **VORRICHTUNG ZUR AUSFÜHRUNG EINER POLYGON-FLÄCHENZERLEGUNG**

DEVICE FOR DIVIDING A POLYGONAL SURFACE

DISPOSITIF POUR L'EXÉCUTION D'UN DÉCOUPAGE DE SURFACES POLYGONALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2017 AT 510442017**

(43) Veröffentlichungstag der Anmeldung:
**28.10.2020 Patentblatt 2020/44**

(73) Patentinhaber: **Wiesner, Patrik**
**1100 Wien (AT)**

(72) Erfinder: **Wiesner, Patrik**
**1100 Wien (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
**EP-A2- 1 072 295 CN-A- 101 980 322**
**US-A- 1 918 754**

**Beschreibung**

Die Erfindung betrifft eine Vorrichtung zur Ausführung einer Polygon-Flächenzerlegung, wobei die Vorrichtung zwischen einem ersten Endzustand, in welchem die Vorrichtung die Form eines ersten Polygons einnimmt, und einem zweiten Endzustand, in welchem die Vorrichtung die Form eines zweiten Polygons von zu dem ersten Polygon gleichem Flächeninhalt einnimmt, bewegbar ist. Diese Vorrichtung umfasst eine Anzahl von Polygonkomponenten in Form von plattenartigen Bauteilen, welche in einer Hauptebene der Vorrichtung oder parallel zu der Hauptebene der Vorrichtung ausgerichtet sind, wobei die Polygonkomponenten in jedem der beiden Endzustände hinsichtlich der Hauptebene überlappungsfrei nebeneinander liegend angeordnet sind und gemeinsam eine Flächenform gemäß dem ersten bzw. zweiten Polygon bilden.

Zerlegungen dieser Art sind insbesondere als mathematische Puzzles bekannt, finden aber auch Anwendung zu didaktischen Zwecken (z. B. mathematischer Unterricht). Auch werden diese gelegentlich z. B. als Spielzeug ausgeführt, nämlich als Satz von Polygonteilen, mit der (spielerischen) Herausforderung des Teilnehmers, die gewünschte Figur zu legen. Besonders reizvoll ist diese Zerlegung, wenn das erste und das zweite Polygon zueinander verschiedene regelmäßige Polygone sind, insbesondere Quadrat, gleichseitiges Dreieck, gleichseitiges Fünfeck ("Pentagon"), oder allgemeiner Polygone, die sich als Seitenflächen von Polyedern mit uniformen Seitenflächen eignen (platonische Körper, allgemeiner auch catalanische Körper).

In eine allgemeinere Klasse ebener Flächenzerlegungen fällt z. B. das sogenannte Tangram, bei dem unter Verwendung einer vorgegebenen Anzahl von einfachen Flächenteilen verschiedene zweidimensionale Figuren ausgelegt werden. Spielzeuge dieser Art haben jedoch den Nachteil, dass leicht eine der Komponente verlorengehen kann. Daher gibt es auch den Ansatz, die Polygonteile durch Gelenke zu verbinden. Vorrichtungen zur Ausführung einer Polygon-Flächenzerlegung sind schon Stand der Technik und bekannt aus EP1072295 sowie aus CN 101980322. Gelenkverbindungen dieser Art sind jedoch sehr anfällig gegenüber Verbiegen oder Bruch.

Der Erfindung liegt daher die Aufgabe zugrunde, einen Polygonkörper zur Verwirklichung einer Polygonzerlegung zu schaffen, worin die Komponenten auf stabile Weise durch

Gelenke verbunden sind und zugleich die Gefahr des Zerbrechens und/oder Verbiegens verringert wird.

Diese Aufgabe wird durch eine Vorrichtung der eingangs genannten Art und in dem Anspruch 1 offenbart gelöst, bei der erfindungsgemäß die Polygonkomponenten (zumindest der überwiegende Teil) miteinander gelenkig verbunden sind, wodurch zumindest ein zyklisch geschlossenes Koppelgetriebe gebildet ist, welches eine relative Bewegung der Polygonkomponenten parallel zu der Hauptebene zulässt, und die Polygonkomponenten in einer einzigen Ebenenlage in der Hauptebene oder in zumindest zwei Ebenenlagen (Höhenschichten, "Etagen") in jeweils verschiedenen Höhen relativ zu der Hauptebene angeordnet sind. Die Polygonkomponenten in dem Koppelgetriebe befinden sich zumindest während eines Zwischenzustands zwischen dem ersten und dem zweiten Endzustand in zumindest zwei verschiedenen Ebenenlagen; dies ermöglicht die relative Bewegung der Komponenten zueinander, und gestattet so den Übergang zwischen den beiden Endzuständen.

Wie bereits erwähnt zeigt eine solche Polygonkörper-Vorrichtung dann eine besonders reizvolle Zerlegung, wenn in den beiden Endzuständen das erste und das zweite Polygon jeweils regelmäßige Polygone sind, die vorteilhafterweise zudem zueinander verschieden sind.

In einer zweckmäßigen Weiterbildung der Erfindung können die Polygonkomponenten derart über ihre Gelenke gruppiert sein, dass (jeweils) zumindest zwei der Polygonkomponenten in verschiedener Ebenenlagen aneinander vorbei bewegbar sind.

Des Weiteren ist es günstig, wenn die Polygonkomponenten ausschließlich über die Gelenkverbindung, insbesondere in Form von Scharniergelenken, miteinander verbunden sind. Durch die Beschränkung auf eine einheitliche Art von Gelenkverbindungen ergibt sich eine vereinfachte Montage und Wartung, außerdem wirkt das Modell ansprechender. Besonders bei komplexeren Polygonformen kann es zweckmäßig sein, zusätzlich zumindest eine Armkomponente vorzusehen, welche selbst zwar nicht Teil der Polygonfigur in den Endzuständen darstellt, aber eine Komponente eines zyklisch geschlossenen Koppelgetriebes bildet, wobei sie mit je zwei der Polygonkomponenten gelenkig verbunden ist und ebenfalls lediglich parallel zu der Hauptebene bewegbar ist; diese Armkomponente(n) ist/sind günstiger Weise in jeder der beiden Endlagen von der jeweiligen Flächenform (d.h. der Polygonfigur) verdeckt, sodass spezifisch bei Aufsicht senkrecht zur Hauptebene auf eine Vorderseite der Vorrichtung keine Armkomponente sichtbar ist. Hierbei ist es auch günstig, wenn jede solche Armkomponente ebenfalls als plattenartiges, parallel zu der Hauptebene orientiertes Bauteil ausgebildet ist.

In einigen Ausführungsformen ist es vorgesehen, dass die Polygonkomponenten in den beiden Endzuständen in einer einzigen Ebenenlage in der Hauptebene angeordnet sind. Das kann z. B. dadurch erreicht werden, das die Vorrichtung (nur) während des Übergangs von einem Endzustand in den anderen Endzustand einen Zwischenzustand einnimmt, in dem zumindest eine der Polygonkomponenten in eine zweite Ebenenlage, welche relativ zu der Hauptebene eine unterschiedliche Höhe aufweist, verschoben ist. Hierbei kann es vorteilhaft sein, wenn die Verschiebung der zumindest einen Polygonkomponente in die zweite Ebenenlage mittels des Koppelgetriebes erfolgt.

In einigen alternativen Ausführungsformen kann dagegen vorgesehen sein, dass sämtliche Polygonkomponenten dauerhaft in zwei oder mehr Ebenenlagen in jeweils verschiedenen Höhen relativ zu der Hauptebene angeordnet sind. In diesem Fall ist es günstig, wenn alle Polygonkomponenten in dem Koppelgetriebe miteinander gelenkig verbunden sind.

Um eine variablere Beweglichkeit der Komponenten zu erreichen, kann es allerdings zweckmäßig sein, wenn die Polygonkomponenten zumindest teilweise gelenkig und zumindest teilweise über Magnete miteinander verbunden sind.

Außerdem kann das Koppelgetriebe so ausgeführt sein, dass es eine Bewegung der Polygonkomponenten quer zur Hauptebene auf lediglich Verschiebungsbewegungen senkrecht zur Hauptebene einschränkt, oder überhaupt die in dem Koppelgetriebe verbundenen Polygonkomponenten lediglich parallel zu der Hauptebene relativ zueinander bewegbar sind.

Die Erfindung samt weiterer Vorzüge und Weiterbildungen wird im Folgenden anhand von beispielhaften Ausführungsform weiter erläutert, die in den Zeichnungen dargestellt sind. Es versteht sich, dass die gezeigten Ausführungsformen lediglich beispielhaft und für die Erfindung nicht einschränkend auszulegen sind. Die Figuren zeigen in schematischer Form:

Fig. 1     einen Polygonkörper gemäß einem ersten Ausführungsbeispiel der Erfindung in einem ersten Endzustand, worin der Polygonkörper ein Quadrat bildet, in einer perspektivischen Ansicht;

Fig. 2     denselben Polygonkörper in einem zweiten Endzustand, der ein gleichseitiges Dreieck bildet, in einer perspektivischen Ansicht;

Fig. 3     eine Explosionsansicht des Polygonkörpers der Fig. 1;

Fig. 4     illustriert einen Zwischenzustand bei der Übergangsbewegung des Polygonkörpers der Fig. 1 und 2 in Aufsicht;

Fig. 5 und 6     zeigen je eine Aufsicht des Polygonkörpers in den beiden Endzuständen mit Bemaßungen;

Fig. 7     zeigt einen Polygonkörper gemäß einem zweiten Ausführungsbeispiel der Erfindung in einem ersten Endzustand, worin der Polygonkörper ein Pentagon (d.h. regelmäßiges Fünfeck) bildet, in einer perspektivischen Ansicht;

Fig. 8     eine Explosionsansicht des Polygonkörpers der Fig. 7;

Fig. 9     zeigt eine Aufsicht des Polygonkörpers im Endzustand als Fünfeck mit Bemaßungen;

Fig. 10     illustriert die Übergangsbewegung zwischen den Endzuständen als Fünfeck und Dreieck;

Fig. 11     zeigt eine Aufsicht des Polygonkörpers im zweiten Endzustand als Dreieck mit Bemaßungen;

Fig. 12 bis 14     zeigen Ansichten der Rückseite des Polygonkörpers in dem ersten Endzustand als Fünfeck (Fig. 12), in einem Zustand des Übergangs (Fig. 13) und in dem zweiten Endzustand als Dreieck (Fig. 14);

Fig. 15     zeigt eine perspektivische Ansicht der Rückseite des Polygonkörpers im Endzustand des Dreiecks;

Fig. 16     zeigt eine zugehörige Explosionsansicht;

Fig. 17     illustriert die Konstruktion der Maße und Positionen der Polygon- und Armkomponenten des Polygonkörpers des zweiten Ausführungsbeispiels;

Fig. 18 bis 22     zeigen perspektivische Ansichten einer Zerlegung eines Polygonkörpers gemäß einem dritten Ausführungsbeispiel der Erfindung, wobei der erste Endzustand (Fig. 18) ein Quadrat und der zweite Endzustand (Fig. 22) ein gleichseitiges Dreieck bildet;

Fig. 23     zeigt die Unterseite des Polygonkörpers im ersten Endzustand entsprechend Fig. 18;

Fig. 24     zeigt die Unterseite des Polygonkörpers im zweiten Endzustand entsprechend Fig. 22;

Fig. 25     bis 31 zeigen perspektivische Ansichten einer Zerlegung eines weiteren Polygonkörpers gemäß einem vierten Ausführungsbeispiel der Erfindung, wobei der erste Endzustand (Fig. 25) ein Pentagon und der zweite Endzustand (Fig. 31) ein gleichseitiges Dreieck bildet;

Fig. 32 bis 37     zeigen den Polygonkörper des vierten Ausführungsbeispiels in den beiden Endzuständen in je einer Aufsicht (Fig. 32, 33) sowie je einer Schnittansicht (Fig. 34, 35) auf mittlere Höhe und je einer Schnittansicht (Fig. 36, 37) auf Grundriss-Niveau; und

Fig. 38 und 39     zeigen die Unterseite des Polygonkörpers des vierten Ausführungsbeispiels im ersten bzw. im zweiten Endzustand.

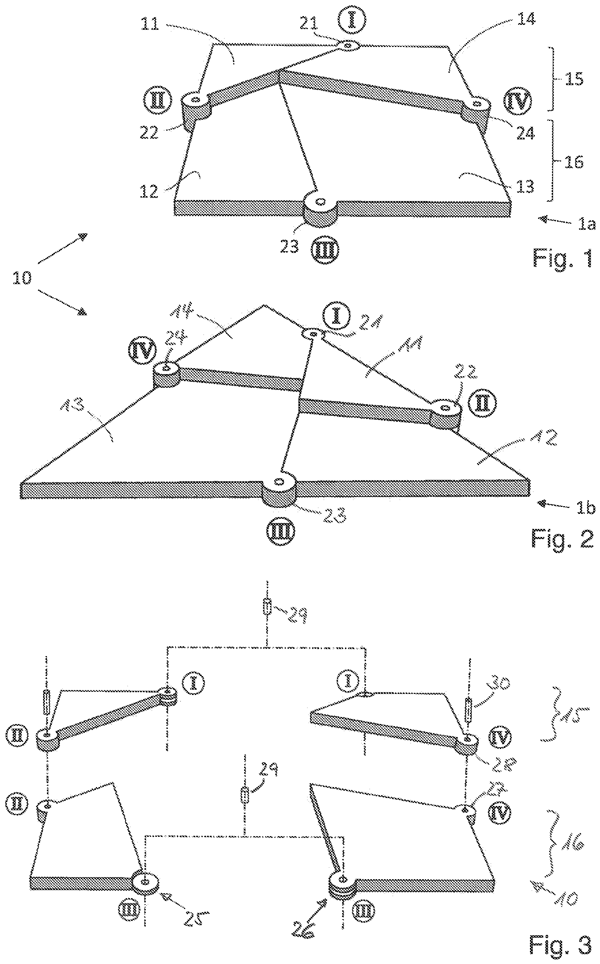

In den Fig. 1 bis 6 ist ein Polygonkörper 10 gemäß einer ersten Ausführungsform der Erfindung dargestellt, welcher eine Zerlegung eines Quadrats in ein gleichseitiges Dreieck und umgekehrt demonstriert. Fig. 1 zeigt einen ersten Endzustand 1a, worin der Polygonkörper 10 eine quadratische Form einnimmt, und Fig. 2 einen zweiten Endzustand 1b, worin der Polygonkörper 10 die Form eines gleichseitigen Dreiecks einnimmt. Wie ersichtlich ist, besteht dieser Polygonkörper aus vier Teilen 11, 12, 13, 14, die hier zugleich Polygonkomponenten bilden. Die vier Teile 11-14 sind durch vier Scharniergelenke, bezeichnet als 21 bis 24, miteinander zu einem zyklischen Koppelgetriebe verbunden. Die Stellen der Scharniergelenke sind zusätzlich mit römischen Zahlen I bis IV bezeichnet.

Die Aufteilung eines Quadrats bzw. flächengleichen gleichseitigen Dreiecks in Teilpolygone, die eine Umgruppierung dieser beiden Formen ineinander ermöglichen, geht auf Sir Henry Dudeney zurück, der in seinem Buch aus dem Jahr 1907 diese Zerlegung eines Quadrates in ein gleichseitiges Dreieck vorgestellt hat ("haberdasher problem"). Der Vorteil dieser Aufteilung ist, dass das Quadrat bzw. Dreieck in nur vier Teile zerlegt wird. Die Zerlegung nach Sir Dudeney sah außerdem drei Gelenke vor, die an Eckpunkten der Teile befindlich sind und die Bewegung zwischen den beiden Endzuständen Quadrat 1a und gleichseitiges Dreieck 1b gestatten. Dieser Ansatz hat jedoch den Nachteil, dass sie für eine Ausführung als ein bewegliches Modell wenig brauchbar ist, weil aufgrund der Verbindung der Teile durch die drei Gelenke sehr instabil ist und leicht zerbricht.

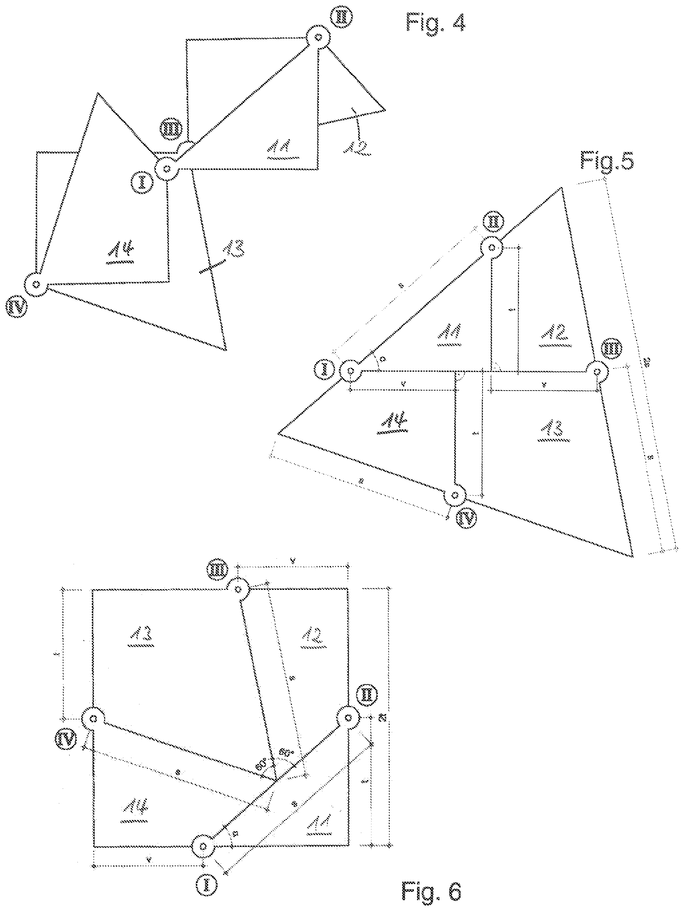

Gemäß der Erfindung wird eine Steigerung der Stabilität und Festigkeit des Gebildes dadurch erreicht, dass eine zyklische Anordnung von Gelenken vorgesehen ist. Zudem wird die Anordnung der flächigen Komponenten in einer einzigen Ebene aufgegeben; stattdessen sind je zwei der Polygonkomponente in einer von zwei Ebenenlagen 15, 16 angeordnet, die auf verschiedenen Höhen - gewissermaßen auf unterschiedlichen "Etagen" - liegen. Dadurch können die Komponenten 11, 14, die sich in der höheren Ebenenlage 15 befinden, sich über die in der niedrigeren Ebenenlage 16 befindlichen Komponenten 12, 13 hinweg bewegen, wie in Fig. 4 illustriert ist.

Der Übergang vom Quadrat zum gleichseitigen Dreieck verläuft nun in gegenüber der Zerlegung nach Sir Dudeney abgewandelter Form, da nicht nur ein zusätzliches Gelenk zu einer sicheren Führung der Polygonkomponenten 11-14 beiträgt, sondern sich die Polygonkomponenten beim Übergang (Fig. 4) übereinander bewegen können.

Bezugnehmend auf Fig. 3 sind die Gelenke 21-24 vorzugsweise als Scharniergelenke ausgebildet, die ein gegenseitiges Verschwenken der Polygonkomponenten um eine Achse senkrecht zu der Ebene der Polygone gestatten. In dem gezeigten Ausführungsbeispiel sind beispielsweise an den Gelenkstellen I-IV der Komponenten 11-14 kreisscheibenartige Erweiterungen 25, 26, 27, 28 vorgesehen, durch die zentral eine Bohrung verläuft. In diese Bohrung ist jeweils ein Stift 29, 30 eingesetzt.

In den Fig. 5 und 6 sind die beiden Endzustände in Aufsicht gezeigt, wobei zusätzlich Bemaßungen angegeben sind. Hierbei bezeichnet s die halbe Seitenlänge des gleichseitigen Dreiecks, t steht für die halbe Seitenlänge des Quadrats; aus der Flächengleichheit von Quadrat und gleichseitigem Dreieck folgert $t^2 = (\sqrt{3}/4) \, s^2$. Der Winkel $\alpha$ in der Komponente 11 bestimmt sich daraus durch $\sin \alpha = 3^{1/4}/2$, was einem Wert von $\alpha \approx 41{,}15°$ entspricht.

Mit v ist eine der Kantenlängen der Komponenten 12,14, die im Quadrat außen liegen, bezeichnet, wobei $v = 2t - s\cdot\cos \alpha = t \cdot (2-( \, 4/\sqrt{3} - 1 \, )^{1/2})$.

Die Polygonkomponenten 11-14 und Gelenke 21-24 bilden somit ein ebenes Koppelgetriebe, mit einer Anordnung in symbolischer Form nach 21-11-22-12-23-13-24-14-21. In dem zweiten Endzustand (Fig. 2 und 5) ist die Umlaufrichtung zu der dem ersten Endzustand (Fig. 1 und 6) entgegengesetzt; dies ist eine Konsequenz davon, dass die Komponenten wie bereits erwähnt während der Übergangsbewegung (Fig. 4) übereinander bewegt werden.

Die Polygonkomponenten sind beispielsweise aus Holz gefertigt, beispielsweise jeweils drei miteinander verleimte Holzplatten. Die Stifte bestehen beispielsweise aus Metall. In anderen Ausführungsvarianten können die Komponenten natürlich aus anderen Materialien, z.B. Kunststoff, gefertigt sein.

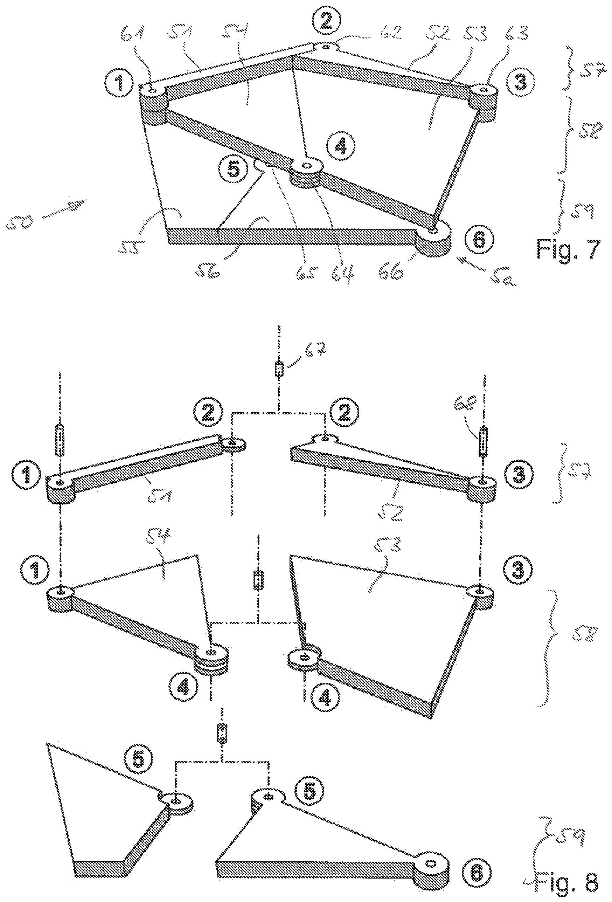

Ein weiteres Ausführungsbeispiel ist in den Fig. 7 bis 16 dargestellt, welches eine Polygonzerlegung eines regelmäßigen Fünfecks ("Pentagon") in ein gleichseitiges Dreieck und umgekehrt verwirklicht. Fig. 7 zeigt den Polygonkörper 50 dieses Ausführungsbeispiels in einem ersten Endzustand 5a, worin der Polygonkörper der Form des Pentagons entspricht, in einer perspektivischen Ansicht der Oberseite. Fig. 8 zeigt eine zugehörende Explosionsansicht. Der Polygonkörper 50 umfasst sechs Polygonkomponenten 51, 52, 53, 54, 55, 56, die durch mehrere Scharniergelenke, bezeichnet als 61 bis 66, verbunden sind. Die Stellen der Scharniergelenke sind zusätzlich mit Zahlen 1 bis 6 in Ringen bezeichnet.

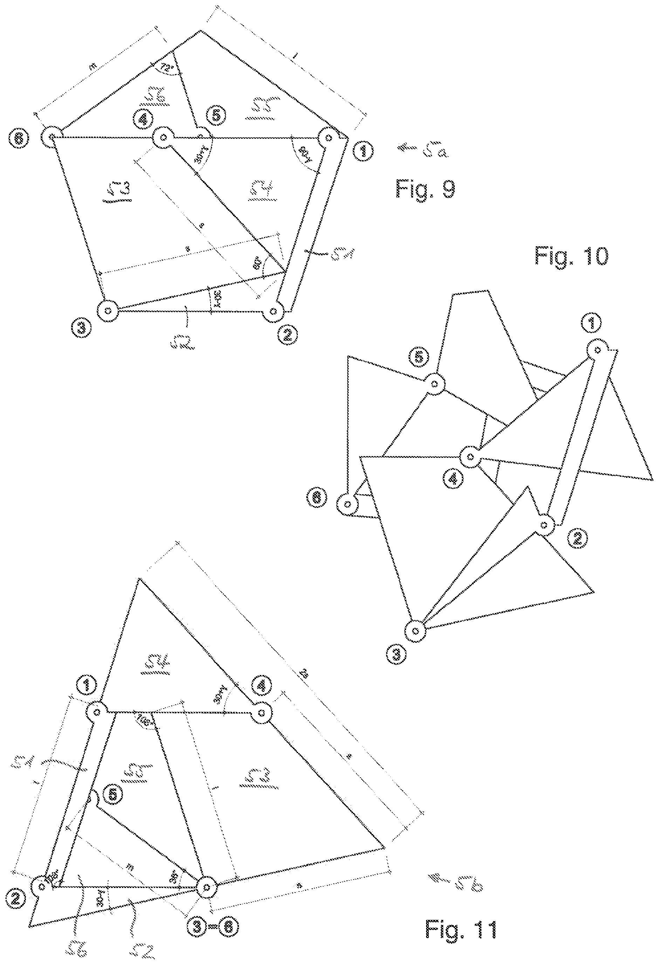

In Fig. 9 ist die Pentagon-Zerlegung in 6 Flächenteile, die dem Polygonkörper 50 zugrunde liegt, dargestellt. Dies entspricht zugleich einer Aufsicht des Polygonkörpers 50 und dessen Polygonkomponenten 51-56. Fig. 10 illustriert ein Stadium im Übergang zu dem zweiten Endzustand 5b, der in Fig. 11 gezeigt ist und in dem der Polygonkörper 50 die Form eines gleichseitigen Dreiecks annimmt.

Diese Zerlegung, die einen Übergang eines gleichseitigen Dreiecks in ein flächengleiches Pentagon unter Verwendung von nur 6 Polygonteile ausführt, wurde von Michael Goldberg im Jahr 1952 angegeben. In dieser Pentagon-Zerlegung sind jedoch nicht alle Teile stets zusammenhängend. Daher ist auch diese Zerlegung nicht unmittelbar für eine Ausführung als ein bewegliches Modell brauchbar. Durch eine Anordnung in einem Gelenkgetriebe schafft die Erfindung ein Gebilde, das eine hohe Stabilität bei gleichzeitiger leichter Beweglichkeit zwischen den beiden Endzuständen 5a, 5b erbringt.

Die Pentagon-Zerlegung wird durch den gezeigten Polygonkörper 50 mit den Gelenkverbindungen 61-66 verwirklicht, die wiederum in mehreren - hier drei - Ebenenlagen 57, 58, 59 angeordnet sind. Insbesondere sind vier Polygonkomponenten 51, 52, 53, 54 miteinander durch die Gelenke 61-64 zu einem zyklischen Koppelgetriebe verbunden. Die zwei weiteren Polygonkomponenten sind miteinander durch das Gelenk 65 verbunden und mit den ersten vier Polygonkomponente 51-54 über zusätzliche Armkomponenten gelenkig verbunden, die weiter unten näher erläutert werden. In der gezeigten Ausführungsform befinden je zwei Komponenten sich in einer der drei Ebenenlagen 57-59, nämlich die Komponenten 51, 52 in der ersten Ebenenlage 57, Komponenten 53, 54 in der mittleren Ebenenlage 58, und Komponenten 55, 56 in der untersten Ebenenlage 59.

In Fig. 9 und 11 sind zusätzlich Bemaßungen der wichtigsten Kantenlängen und Winkel angegeben. Mit s ist wiederum die halbe Seitenlänge des gleichseitigen Dreiecks bezeichnet, $l$ steht für die Seitenlänge des Pentagons; aus der Flächengleichheit von Pentagon und gleichseitigem Dreieck folgert: $l^2 \cdot (25+10\sqrt{5})^{1/2}/4 = (\sqrt{3}/4)\, s^2$. Weiters werden in Fig. 9 und 11 eine Kantenlänge m der Polygonkomponente 56 und ein Winkel $\gamma$ verwendet: Die Kantenlänge m ergibt sich als m = $l\cdot\Phi/2$, wobei $\Phi$ die sogenannte goldene Zahl ist, $\Phi = (1+\sqrt{5})/2 \approx 1{,}6180$. Der Winkel $\gamma$ bestimmt sich aus

$$\tan \gamma = ((\,(1+\Phi/2)\tan 30^\circ\, /\, \cos 18^\circ\,) - 1)^{1/2},$$

somit $\gamma \approx 17{,}398°$. Die schmale Kantenlänge $p$ des "Streifens" der Komponente 51 zwischen Gelenkstelle 2 und benachbartem Eckpunkt des Pentagons ist $p = l \cdot (1-\Phi/2)/2$, somit $p \approx 0{,}0955\, l$.

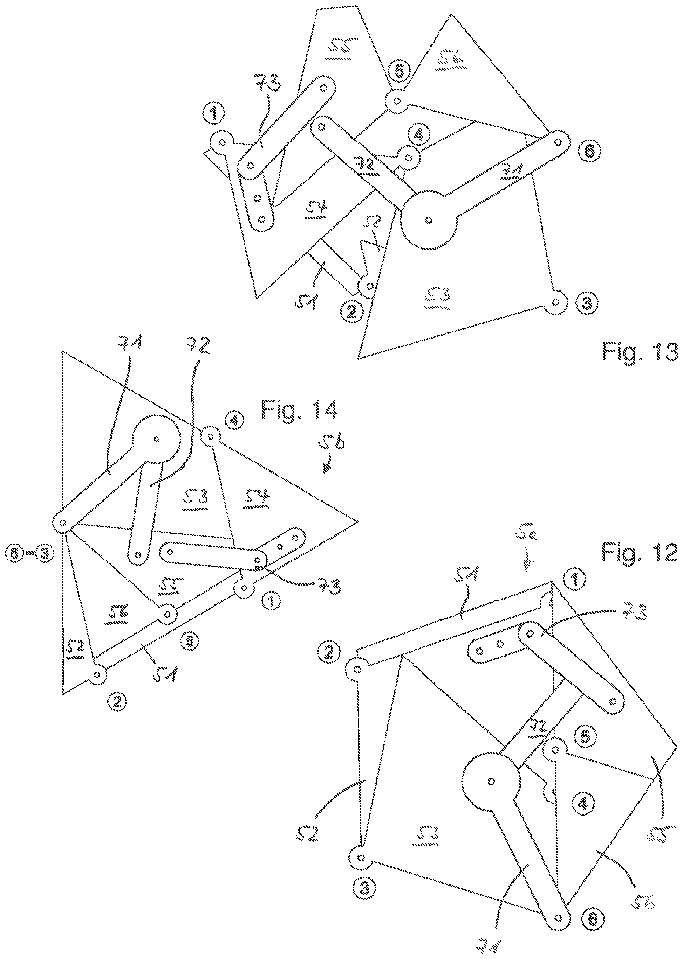

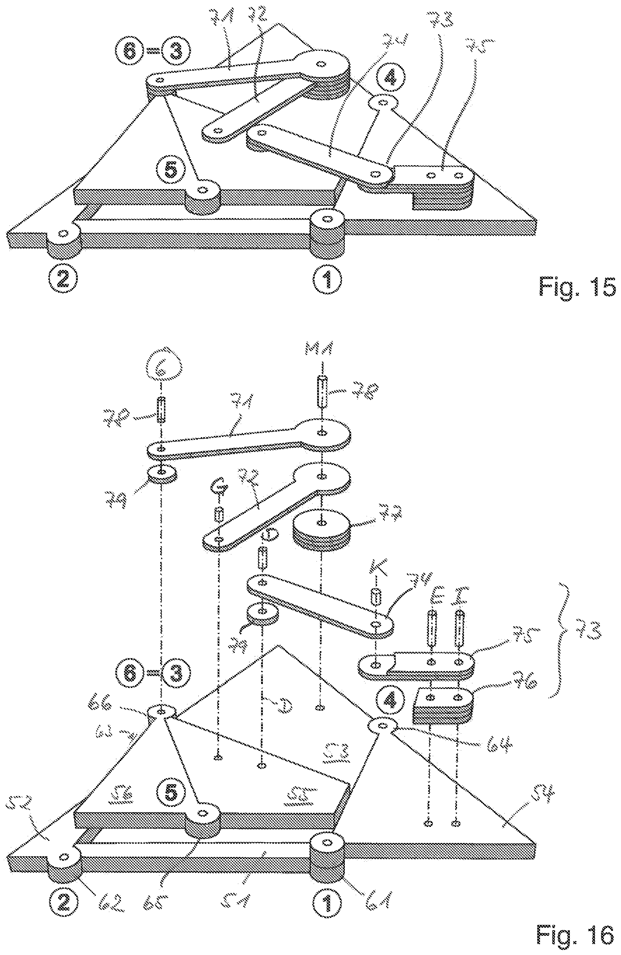

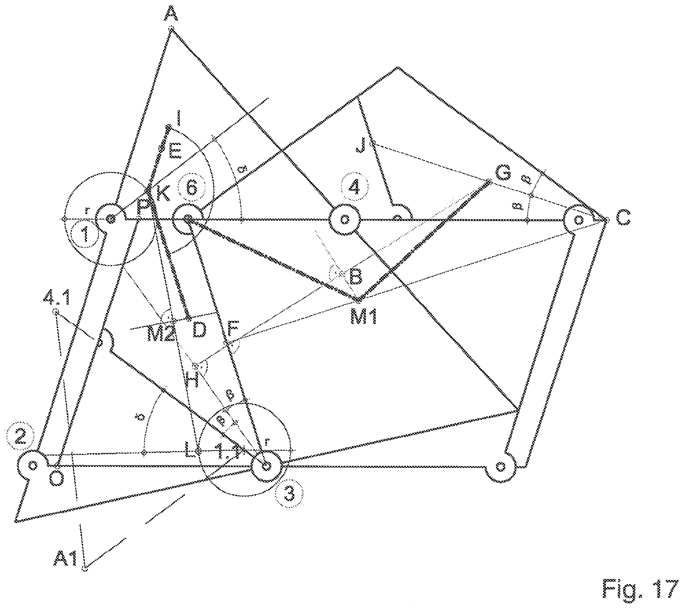

Um eine sichere Bewegung aller 6 Polygonkomponenten, insbesondere auch der Komponenten 55 und 56 zu ermöglichen (Fig. 10, 13), sind gemäß einer Weiterbildung der Erfindung zusätzliche Armkomponenten 71, 72, 73 vorgesehen, die auf der Rückseite des Polygonkörpers 50 an bestimmten Positionen der Polygonkomponenten und/oder an bestimmten Gelenken angebracht sind. Die Gelenke sind auch hier als Scharniergelenke ausgebildet, wobei in jedem Gelenk ein Stift 67, 68, 78 (Fig. 8, 16) in eine jeweilige Bohrung eingesetzt ist. Neben den in Fig. 7 und 16 ersichtlichen Gelenkstellen 1 bis 6 weist diese Ausführungsform noch weitere Gelenkstellen D, G, K, M1 (Fig. 16, 17) auf, deren Position weiter unten erläutert werden.

Die Armkomponenten 71, 72, 73 sind in den Rückseiten-Ansichten der Fig. 12-14 in dem ersten Endzustand 5a, einem Übergangszustand und dem zweiten Endzustand 5b des Polygonkörpers 50 gezeigt. Fig. 15 und 16 zeigen zudem den Polygonkörper 50 im Endzustand 5b in einer perspektivischen Ansicht und einer zugehörenden Explosionsansicht. Die Armkomponenten 71 und 72 sind z.B. gerade Koppelstücke, die mit einem ersten Ende an der Befestigungsstelle M1 über ein Abstandstück 77 gelenkig angebracht sind; das zweite Ende ist an der Gelenkstelle 6 bzw. der Befestigungsstelle G gelenkig angebracht. Die Armkomponente 73 ist zweiteilig und umfasst einen beweglichen Teil 74 und eine Halterung 75. Die Halterung 75 ist mittels eines Abstandsstücks 76 fest an der Polygonkomponente 54 angebracht - beispielsweise über Stifte 78 in Befestigungsstellen E, I - und bildet einen Ausleger für eine Befestigungsstelle K, an der der bewegliche Teil 74 an seinem ersten Ende angelenkt ist; das zweiten Ende des beweglichen Teils 74 ist an der Befestigungsstelle D angelenkt. Zwischenscheiben 79 dienen dem Ausgleich hinsichtlich der Höhe der jeweiligen Armkomponente (hier Bauteile 71 und 74) in Bezug auf die jeweils beteiligten Befestigungsstellen (hier Gelenk 6 und Befestigungsstelle D an der Komponente 55).

Die Positionen der Arme wurde anhand einer Überlagerung der Figuren des Pentagons und Dreiecks wie in Fig. 17 gezeigt und unter Vergleich der Positionen der jeweiligen Komponenten und Eckpunkte in den beiden Endzuständen 5a, 5b in einer Weise festgelegt, welche ermöglicht, dass eine einfache, aber effiziente Drehungsbewegung der Komponenten erreicht wird. Bezugnehmend auf Fig. 17 wird die Konstruktion der Positionen und Längen der Armkomponenten wie folgt erläutert:

1. Den Armkomponente 71 und 72 entsprechen in Fig. 16 die Strecken 6-M1 und M1-G :

- F = Mittelpunkt der Strecke zwischen Gelenkstellen 3 - 6; die Mittelnormale über F wird errichtet;
- G= Mittelpunkt der Strecke C-J;
- H wird in dem Winkel $2\beta$ zu der Gelenkstelle 3 auf der Winkelhalbierenden im gleichen Abstand konstruiert wie G in dem Winkel $2\beta$ zu dem Punkt C;
- B = Mittelpunkt der Strecke H-G, die Mittelnormale über B wird errichtet;
- M1 ist der Schnittpunkt der Mittelnormalen über B mit der Mittelnormalen über F.

2. Die zweiteilige Armkomponente 73 umfasst einen beweglichen Teil 74, entsprechend der Strecke K-D, und eine Halterung 75, entsprechend der Strecke K-I:

- Auf der Polygonkomponente 54 (entspricht Dreieck A-1-4) wird ausgehend von der Stelle 1 eine Gerade mit Winkel $\delta = (90°-\gamma)/2$ zur Strecke 1-4 errichtet;
- Die Linie O-P wird verlängert und schneidet im Dreieck A-1-4 die so konstruierte Gerade: dies ergibt Punkt K.
- Ein Hilfspunkt 1.1 wird in einem Abstand pi zu Punkt 3 konstruiert, wobei $p_1$ für die Länge der Strecke 1-P steht; die Linie 3-1.1 steht in einem Winkel von 36° zur Grundlinie 2-3. An dem Punkt 1.1 wird ein Dreieck A1-1.1-4.1 errichtet, das zum Dreieck A-1-4 kongruent ist; die Position von Punkt K wird in das Dreieck A1-1.1-4.1 übertragen; dies ergibt Punkt L.
- M2 = Mittelpunkt der Strecke K-L, die Mittelnormale über M2 wird errichtet;
- D = Schnittpunkt der Mittelnormalen über M2 mit der Parallelen durch Punkt K zu der Strecke 3-6.
- Ausgehend von Punkt K wird eine Parallele zur Geraden A-1 errichtet.
- Punkt I: Auf der Parallelen in einem Abstand zum Punkt K, z.B. K-I = 1/2 K-D, und
- Punkt E: zwischen Punkten K und I, z.B. I-E = 1/3 K-I

Die Halterung 75 wird an den so bestimmten Stellen E und I befestigt, wobei sie nur in diesem Bereich der Strecke I-E mit der Fläche der Polygonkomponente 54 verbunden.

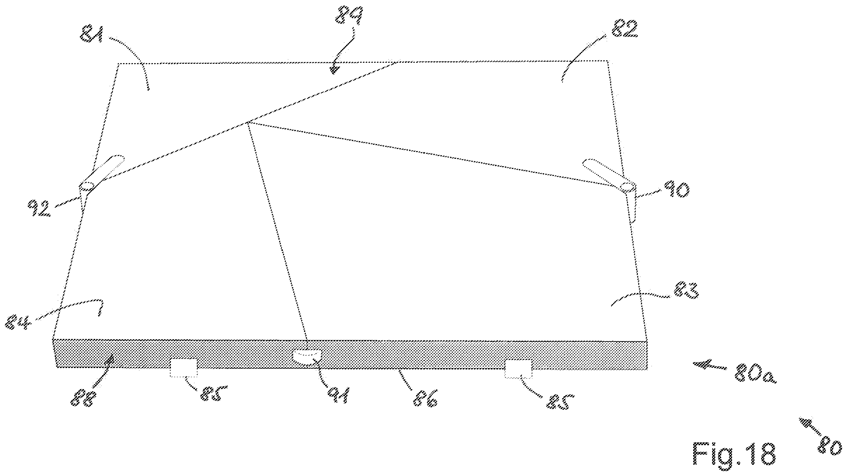

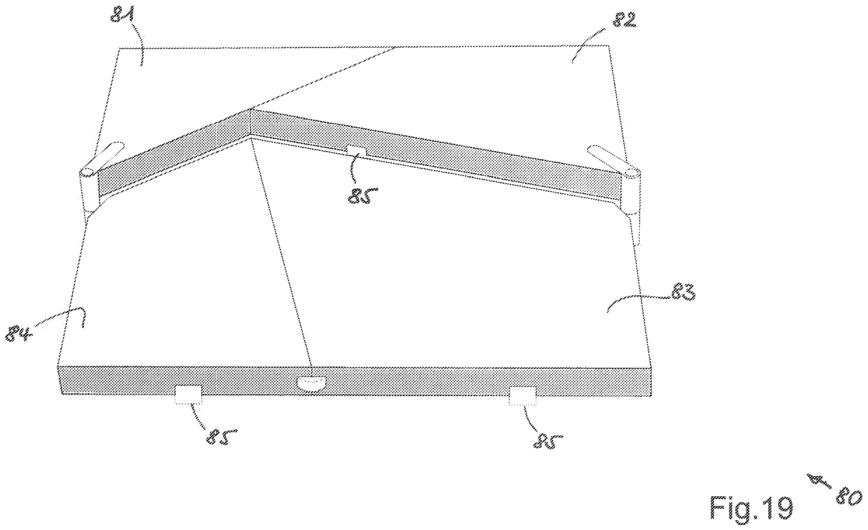

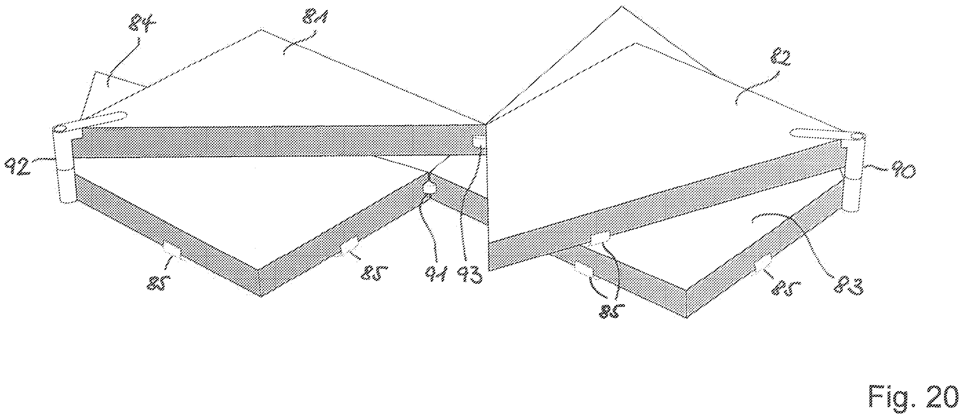

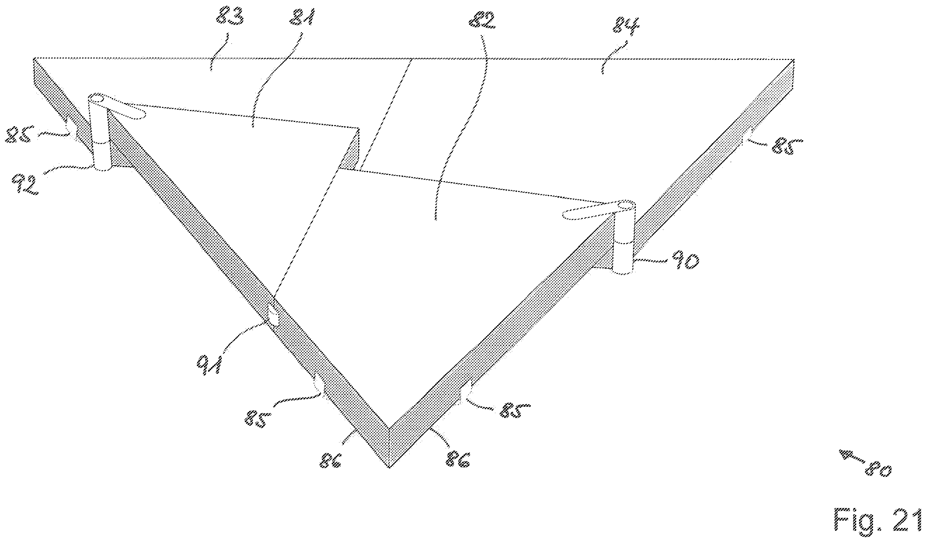

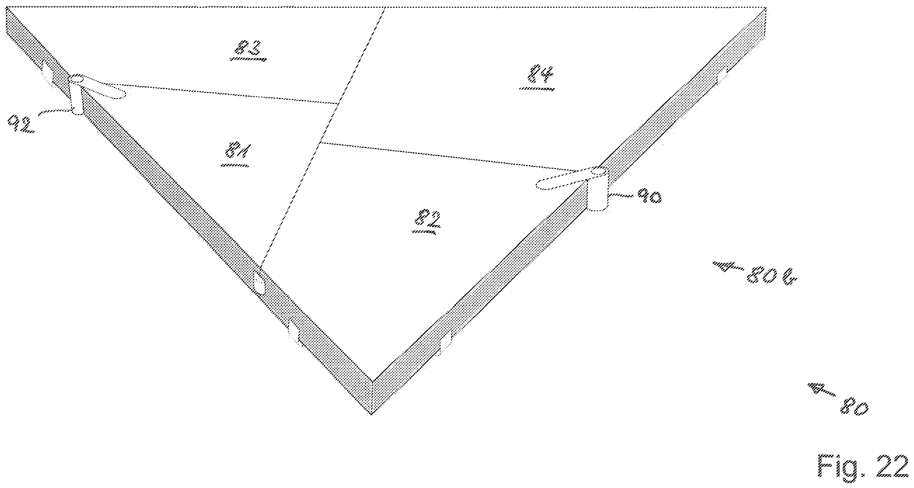

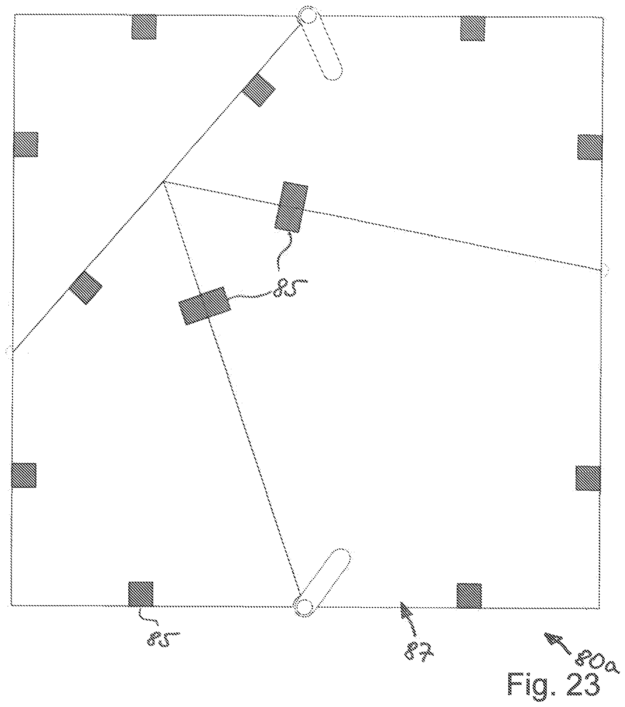

In den Fig. 18 bis 22 ist ein Polygonkörper 80 gemäß einer dritten Ausführungsform der Erfindung dargestellt, welcher eine Zerlegung eines Quadrats in ein gleichseitiges Dreieck und umgekehrt demonstriert. Fig. 18 zeigt einen ersten Endzustand 80a, worin der Polygonkörper 80 eine quadratische Form einnimmt, und Fig. 22 einen zweiten Endzustand 80b, worin der Polygonkörper 80 die Form eines gleichseitiges Dreiecks einnimmt. Wie ersichtlich ist, besteht dieser Polygonkörper aus vier Teilen 81, 82, 83, 84, die hier zugleich Polygonkomponenten bilden. Die vier Teile 81-84 sind durch vier Scharniergelenke, bezeichnet mit 90, 91, 92, 93, miteinander zu einem zyklischen Koppelgetriebe verbunden. Überdies sind die Polygonkomponenten 81-84 in den beiden Endzuständen (80a, 80b) zumindest teilweise über Magnete 85 miteinander verbunden (s. Fig. 23). Die Magnete 85 sind an unteren Kanten 86 der Polygonkomponenten 81-84 befestigt, sodass diese nur an der Unterseite 87 erkennbar sind. (In einer hier nicht gezeigten Variante können die Magnete 85 auch in den Kantenflächen 88 der Polygonkomponenten 81-84 befestigt sein, sodass diese weder auf der Unterseite 87 noch an der Oberseite 89 visuell erkennbar sind.) Zwei der Scharniergelenke 90, 92 sind derart ausgestaltet, dass diese eine vertikale Verschiebung von zwei Polygonkomponenten 81, 82 ermöglichen (s. Fig. 19). Bei dieser vertikalen Verschiebung werden die magnetischen Verbindungen zwischen den Polygonkomponenten (81-84) gelöst. Die Scharniergelenke 90-93 ermöglichen in einem nächsten Schritt die horizontale Verschiebung der Polygonkomponenten 81, 82 in einer ersten Ebene, und die horizontale Verschiebung der Polygonkomponenten 83, 84 in einer zweiten Ebene, wobei die erste Ebene und die zweite Ebene vertikal zueinander verschoben sind. In dieser Anordnung kann die Zerlegung von dem ersten Endzustand 80a, Quadrat, zu dem zweiten Endzustand 80b, gleichseitiges Dreieck, erfolgen. Fig. 20 zeigt einen Zwischenschritt dieser Zerlegung. Fig. 21 zeigt den Polygonkörper in einem weiteren Zustand, bei welchem die horizontale Verschiebung der Polygonkomponenten (von einem Quadrat zu einem gleichseitigen Dreieck) abgeschlossen ist, wobei jeweils zwei Polygonkomponenten noch in unterschiedlichen vertikalen Ebenen vorliegen. Im letzten Schritt der Zerlegung werden die vier Polygonkomponenten 81-84 über die Scharniergelenke 90, 92 wieder in ein und dieselbe Ebene verschoben, wobei in dem vorliegenden Endzustand 80b die zumindest teilweise magnetischen Verbindungen zwischen den Polygonkomponenten wieder vorliegen. Die hier beschriebene Zerlegung ist reversibel, wobei der reversible Prozess die Zerlegung von einem gleichseitigen Dreieck zu einem Quadrat darstellt.

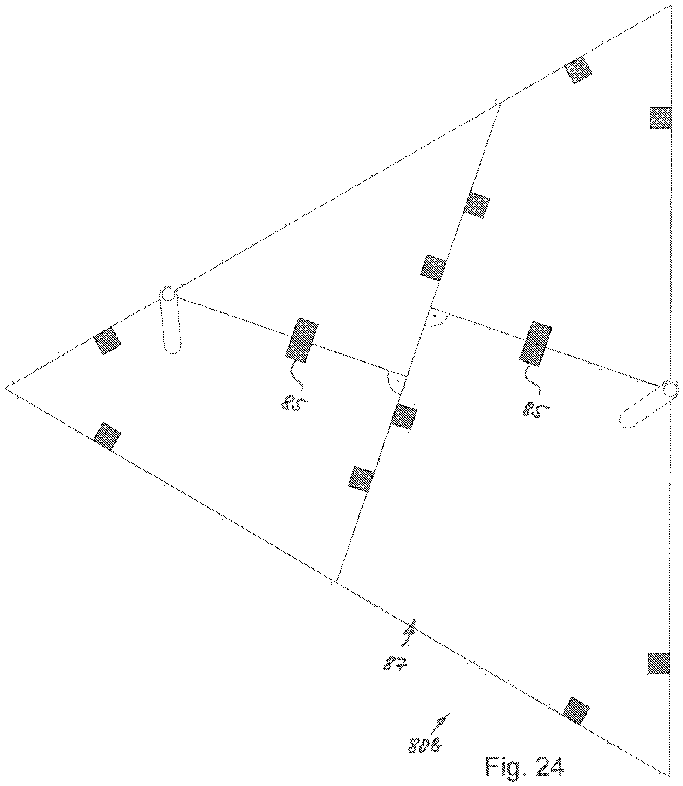

Die Fig. 23 und 24 zeigen beispielhafte Positionen für die Magnete 85 an den Polygonkomponenten 81-84. Bei jenen Magneten 85 die sich in einem der beiden Endzustände kontaktieren liegt magnetische Anziehungskraft vor.

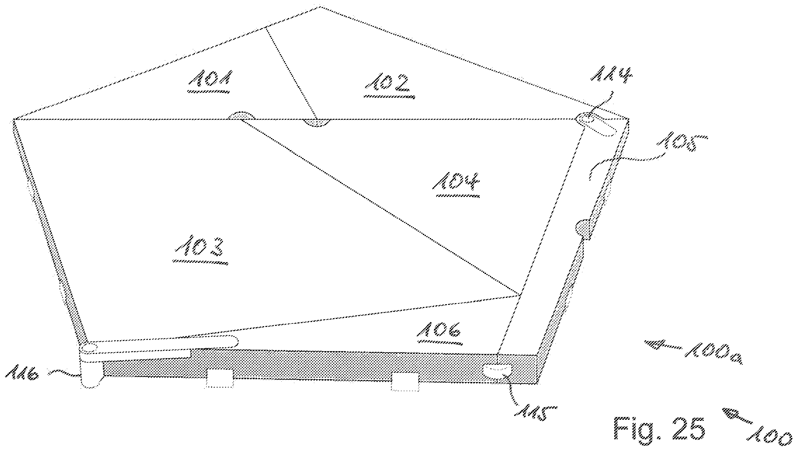

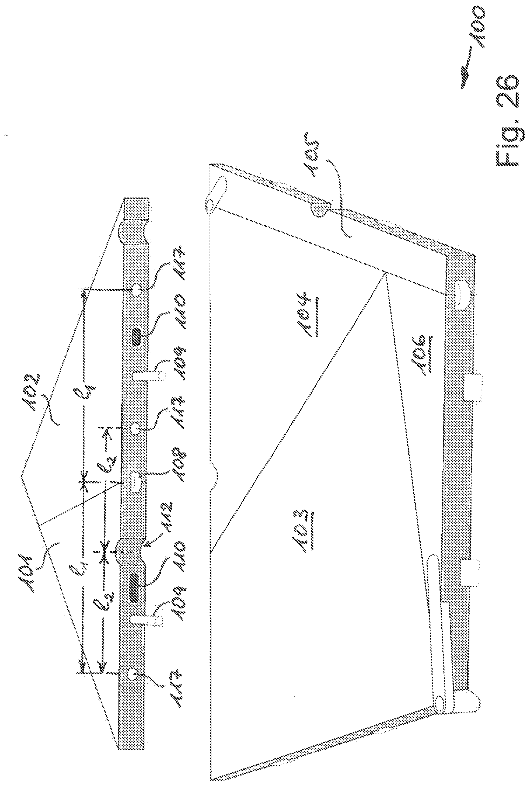

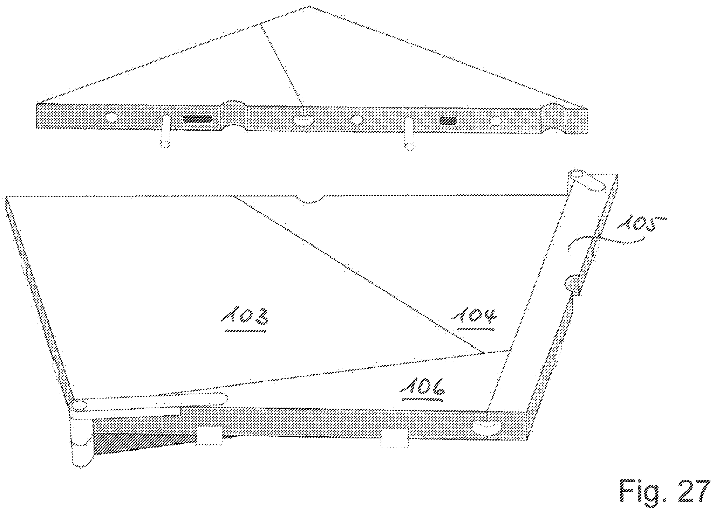

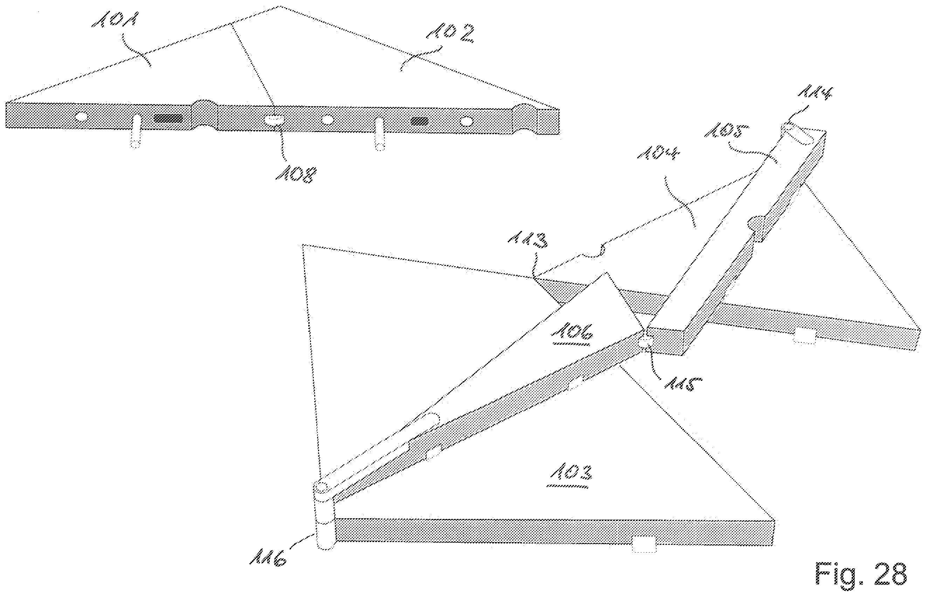

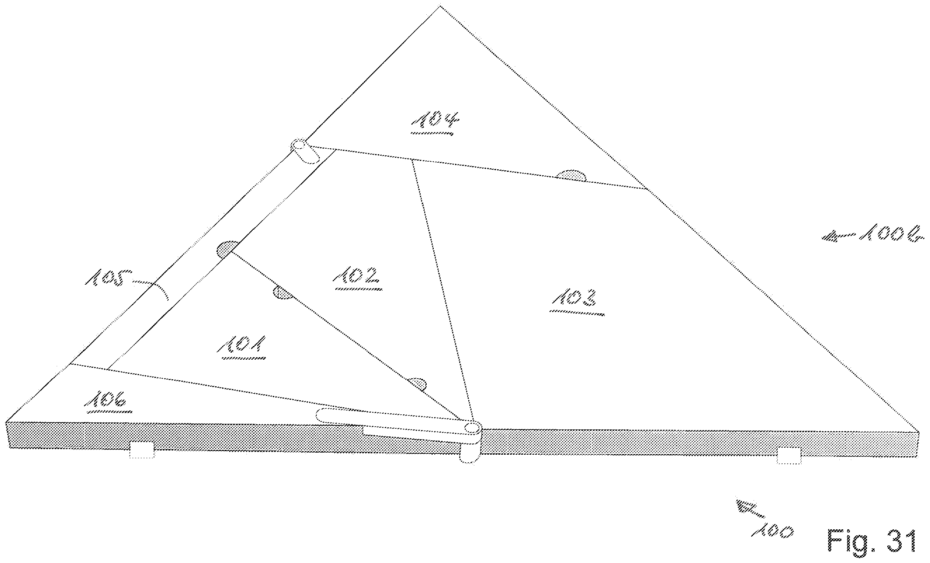

Die Fig. 25 bis 31 zeigen eine Zerlegung eines weiteren Polygonkörpers 100 gemäß einem vierten Ausführungsbeispiel, bei dem der erste Endzustand 100a ein Pentagon und der zweite Endzustand 100b ein gleichseitiges Dreieck darstellt. In den beiden Endzuständen 100a, 100b der Zerlegung liegen, wie in dem Ausführungsbeispiel gemäß den Fig. 18 bis 24, alle Polygonkomponenten 101, 102, 103, 104, 105, 106 in ein und derselben Ebene. Während des Übergangs werden einerseits Polygonkomponenten 103-106 mittels Scharniergelenken 113, 114, 115, 116 vertikal zueinander verschoben, um die horizontale Verschiebung der Polygonkomponenten 103-106 relativ zueinander zu ermöglichen. Andererseits werden die Polygonkomponenten 101 und 102 vorübergehend von den anderen Polygonkomponenten 103-106 (die ein Koppelgetriebe im Sinne der Erfindung bilden) abgetrennt, und es werden die magnetischen Verbindungen 117 der Polygonkomponenten 101-104 vorübergehend gelöst. Die magnetischen Verbindungen 117 befinden sich in den in Fig. 26 sichtbaren Kantenflächen der Komponenten 101 und 102, die im Pentagon-Zustand im Inneren der Pentagonfigur liegen und im Dreieck-Endzustand einander zugewandt sind. Die Magnete der magnetischen Verbindung haben eine geeignete Größe (beispielsweise kleiner als die der Verbindungen 107, sofern dies möglich ist), sodass sie innerhalb der Kantenfläche untergebracht werden können, ohne die Dicke der Holzplatten, die die Komponenten 101, 102 bilden, zu übersteigen. In dem gezeigten Ausführungsbeispiel sind drei magnetische Verbindungen 117 in der Kantenfläche der Polygonkomponenten 101, 102 vorgesehen; die Position der beiden äußeren der magnetischen Verbindungen 117 ist beiderseits des Orts des Gelenks 108 in einem Abstand $l_1$ zu letzterem; die mittlere der magnetischen Verbindungen ist so positioniert, dass sie zu der Ausnehmung 112 für das Gelenk 113 den gleichen Abstand $l_2$ hat wie diese Ausnehmung zur linken äußeren magnetischen Verbindung. Die Magnete 107 sind (ähnlich wie die Magnete 85 der dritten Ausführungsform) an den Unterkanten der Polygonkomponenten angeordnet, sodass diese von oben gesehen ebenfalls nicht sichtbar sind.

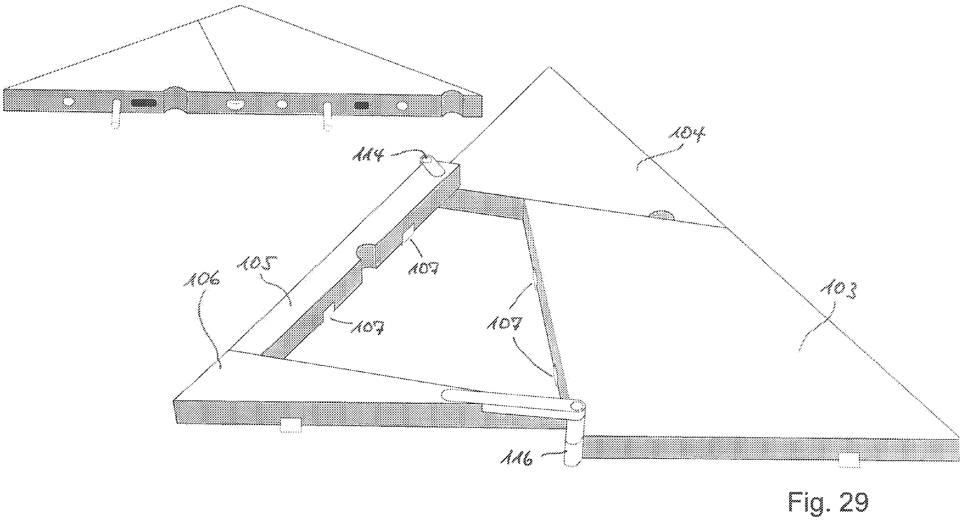

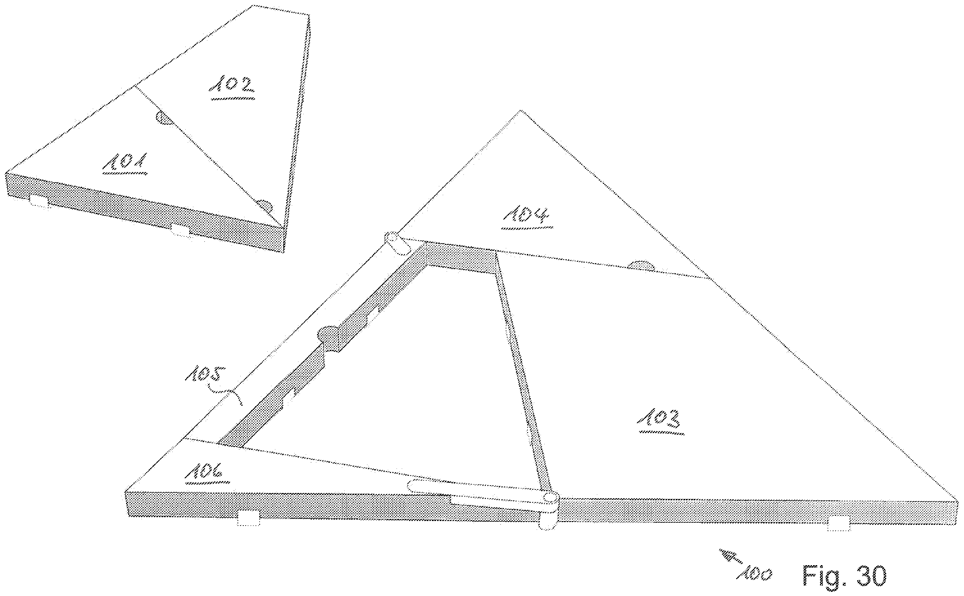

Nach der vertikalen bzw. horizontalen Zerlegung von einem Pentagon zu einem gleichseitigen Dreieck (und umgekehrt) werden die gelösten Polygonkomponenten 101, 102 wieder zu einer Gesamtheit vereint, wobei hier die magnetischen Verbindungen 107 wieder zusammengefügt werden. Die beiden Polygonkomponenten 101, 102, welche während der Zerlegung von den restlichen Polygonkomponenten 103-106 getrennt werden, liegen im ersten Endzustand 100a als Dreieck und im zweiten Endzustand 100b als Trapez vor. Der Übergang der Polygonkomponenten 101, 102 von einem Dreieck zu einem Trapez erfolgt über das Gelenk 108 (s. Fig. 29 und 30). Zusätzlich können Verbindungsstifte 109 verwendet werden, die in die Kantenflächen der Komponenten in dort vorgesehene korrespondierende Ausnehmungen 110 eingesetzt werden, um die Verbindung zwischen den ablösbaren Polygonkomponenten 101 und 102 miteinander bzw. mit den zugeordneten Komponenten 103 und 104 zu stabilisieren.

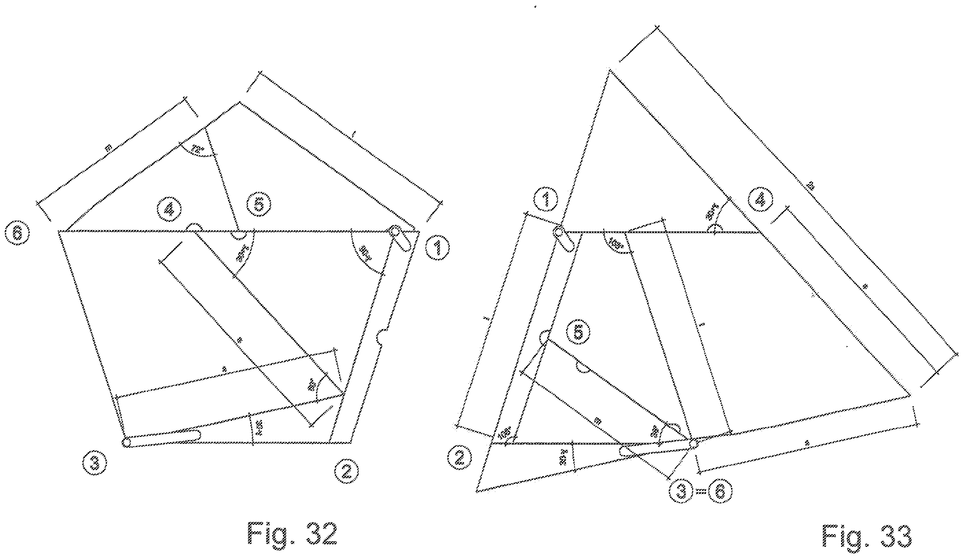

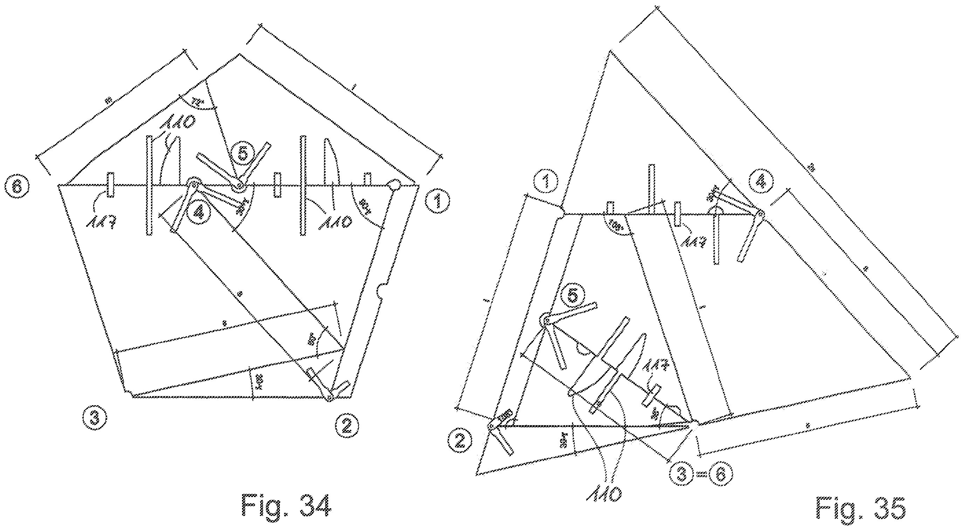

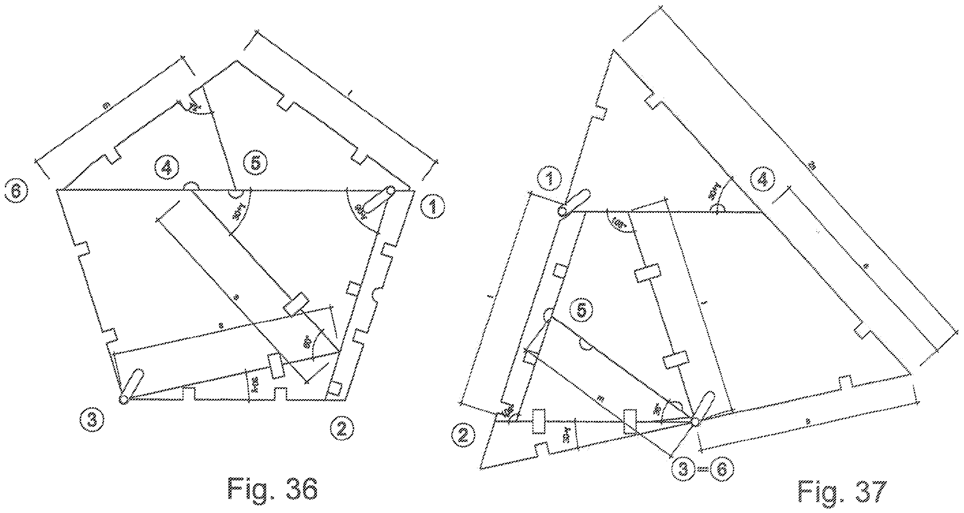

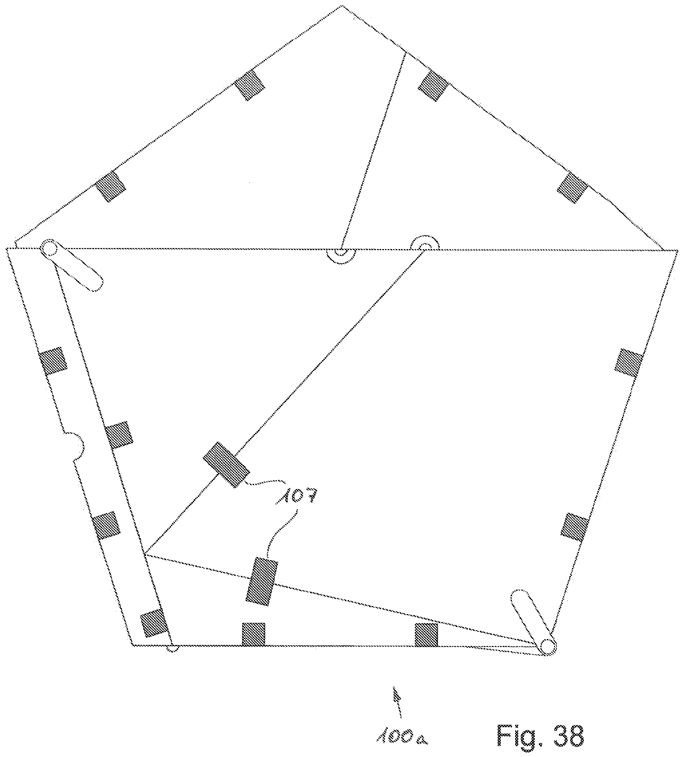

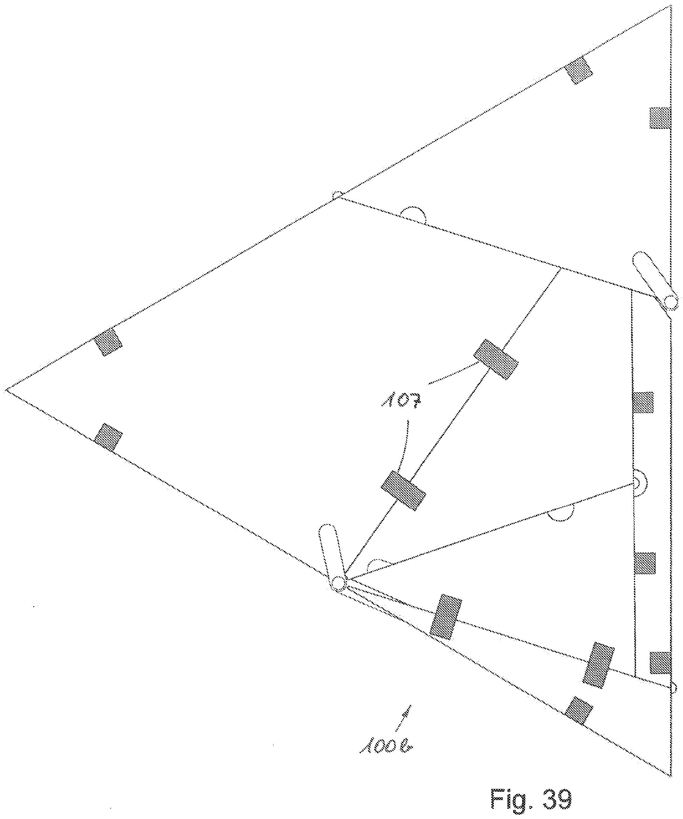

Fig. 32 und 33 zeigen den Polygonkörper 100 des vierten Ausführungsbeispiels in den beiden Endzuständen 100a und 100b jeweils in Aufsicht; hierbei werden durch Zahlen 1 bis 6 in Ringen Gelenkspositionen bezeichnet, die denen in dem zweiten Ausführungsbeispiel gemäß Fig. 7-11 entsprechen. Fig. 34 und 35 zeigen entsprechende Ansichten gemäß einem Schnitt parallel zur Hauptebene auf der Höhe der Verbindungsstifte 109. Wie in Fig. 34 und 35 erkennbar ist, können einige der Ausnehmungen nach Art eines Kreissegments erweitert sein, um eine Bewegung der Polygonkomponenten 101, 102 um das Gelenk 108 mit eingesetzten Verbindungsstiften 109 zu ermöglichen; der Radius der Kreissegmentlinie entspricht hierbei dem Abstand von der Drehachse des zugeordneten Gelenks 108. Fig. 36 und 37 zeigen weitere Ansichten gemäß einem Schnitt parallel zur Hauptebene auf der Höhe unmittelbar über der Bodenfläche (Grundriss). In diesen beiden Figuren sind die Ausnehmungen erkennbar, die für die magnetischen Verbindungen 107 vorgesehen sind. Fig. 38 und 39 schließlich zeigen Unteransichten des Polygonkörpers im Endzustand 100a bzw. 100b. Hierbei sind wiederum die Positionen der Magnete 107 erkennbar.

Es versteht sich, dass die Aufeinanderfolge der Ebenenlagen und die Zuordnung der Polygonkomponente zu den Ebenenlagen variiert werden und ist insbesondere nicht auf jeweils zwei je Ebenenlage beschränkt.

**Patentansprüche**

1. Vorrichtung (10, 50, 80, 100) zur Ausführung einer Polygon-Flächenzerlegung, wobei die Vorrichtung zwischen einem ersten Endzustand (1a, 5a, 80a, 100a), in welchem die Vorrichtung die Form eines ersten Polygons einnimmt, und einem zweiten Endzustand (1b, 5b, 80b, 100b), in welchem die Vorrichtung die Form eines zweiten Polygons von zu dem ersten Polygon gleichem Flächeninhalt einnimmt, bewegbar ist,

   umfassend eine Anzahl von Polygonkomponenten (11, 12, 13, 14; 51, 52, 53, 54, 55, 56; 81, 82, 83, 84; 101, 102, 103, 104, 105, 106) in Form von plattenartigen Bauteilen, welche in einer Hauptebene der Vorrichtung oder parallel zu der Hauptebene der Vorrichtung ausgerichtet sind, wobei die Polygonkomponenten (11-14, 51-56, 81-84, 101-106) in jedem der beiden Endzustände (1a, 1b, 5a, 5b, 80a, 80b, 100a, 100b) hinsichtlich der Hauptebene überlappungsfrei nebeneinander liegend angeordnet sind und gemeinsam eine Flächenform gemäß dem ersten bzw. zweiten Polygon bilden, wobei sämtliche oder zumindest ein überwiegender Teil der Polygonkomponenten (11-14, 51-56, 81-84, 101-106) miteinander gelenkig verbunden sind und zumindest ein zyklisch geschlossenen Koppelgetriebe (21-24, 61-64, 90-93, 113-116) gebildet ist, welches eine relative Bewegung der Polygonkomponenten parallel zu der Hauptebene zulässt, und die Polygonkomponenten in dem Koppelgetriebe zumindest während eines Zwischenzustands zwischen dem ersten und dem zweiten Endzustand in zumindest zwei Ebenenlagen (15, 16) in jeweils verschiedenen Höhen relativ zu der Hauptebene angeordnet sind, **gekennzeichnet durch** zumindest eine Armkomponente (71, 72, 73), welche eine Komponente eines zyklisch geschlossenen Koppelgetriebes bildet, wobei sie mit je zwei der Polygonkomponenten gelenkig verbunden ist und ebenfalls lediglich parallel zu der Hauptebene bewegbar ist, wobei die zumindest eine Armkomponente in jeder der beiden Endlagen (5a, 5b) von der jeweiligen Flächenform verdeckt ist, nämlich bei Aufsicht senkrecht zur Hauptebene auf eine Vorderseite der Vorrichtung nicht sichtbar ist,

oder, dadurch dass die Polygonkomponenten (81, 84, 101, 106) zumindest teilweise gelenkig und zumindest teilweise über Magnete (85, 107) miteinander verbunden sind.

2. Vorrichtung nach Anspruch 1, **dadurch gekennzeichnet, dass** zumindest zwei der Polygonkomponenten (11, 14; 12, 13; 51, 52; 53, 54; 55, 56; 81, 82; 83, 84; 103,104; 105, 106) in verschiedener Ebenenlagen (15; 16; 57; 58; 59) aneinander vorbei bewegbar sind.

3. Vorrichtung nach Anspruch 1 oder 2, **dadurch gekennzeichnet, dass** das erste und das zweite Polygon zueinander verschiedene regelmäßige Polygone sind.

4. Vorrichtung nach einem der vorhergehenden Ansprüche, **dadurch gekennzeichnet, dass** die Polygonkomponenten (11-14, 51-56) ausschließlich über Scharniergelenke (21-24, 61-66) miteinander verbunden sind.

5. Vorrichtung nach Anspruch 1, **dadurch gekennzeichnet, dass** die zumindest eine Armkomponente (71, 72, 73) ebenfalls als plattenartiges, parallel zu der Hauptebene orientiertes Bauteil ausgebildet ist.

6. Vorrichtung nach einem der Ansprüche 1 bis 5, **dadurch gekennzeichnet, dass** die Polygonkomponenten (81-84, 101-106) in den beiden Endzuständen (80a, 80b, 100a, 100b) in einer einzigen Ebenenlage in der Hauptebene angeordnet sind.

7. Vorrichtung nach Anspruch 6, **dadurch gekennzeichnet, dass** sie während des Übergangs von einem Endzustand in den anderen Endzustand einen Zwischenzustand einnimmt, in dem zumindest eine der Polygonkomponenten (81-84, 101-106) in eine zweite Ebenenlage, welche relativ zu der Hauptebene eine unterschiedliche Höhe aufweist, verschoben ist.

8. Vorrichtung nach Anspruch 7, **dadurch gekennzeichnet, dass** die Verschiebung der zumindest einen Polygonkomponente (81-84, 101-106) in die zweite Ebenenlage mittels des Koppelgetriebes (90-93) erfolgt.

9. Vorrichtung nach einem der Ansprüche 1 bis 5, **dadurch gekennzeichnet, dass** sämtliche Polygonkomponenten (11-14, 51-56) miteinander gelenkig verbunden sind und dauerhaft in zwei oder mehr Ebenenlagen (15, 16) in jeweils verschiedenen Höhen relativ zu der Hauptebene angeordnet sind.

10. Vorrichtung nach einem der Ansprüche 1 bis 5, **dadurch gekennzeichnet, dass** die in dem Koppelgetriebe verbundenen Polygonkomponenten lediglich parallel zu der Hauptebene relativ zueinander bewegbar sind.

**Claims**

1. A device (10, 50, 80, 100) for performing polygonal area decomposition, the device being movable between a first end state (1a, 5a, 80a, 100a) in which the device takes the form of a first polygon and a second end state (1b, Sb, 80b, 100b) :in which the device takes the form of a second polygon of equal area to the first polygon, comprising a number of polygon components (11, 12, 13, 14; 51, 52, 53, 54, 55, 56; 81, 82, 83, 84; 101, 102, 103, 104, 105, 106) in the form of plate-like components which are aligned in a main plane of the device or parallel to the main plane of the device, wherein the polygon components (11-14, 51-56, 81-84, 101-106) in each of the two end states (1a, 1b, 5a, Sb, 80a, 80b, 100a, 100b) are arranged adjacent to one another without overlapping with respect to the main plane and together form a surface shape in accordance with the first and second polygon respectively, wherein all or some of the polygon components (11-14, 51-56, 81-84, 101-106) are arranged adjacent to one another without overlapping with respect to the main plane and together form a surface shape in accordance with the first and second polygon respectively second polygon, wherein all or at least a predominant part of the polygon components (11-14, 51-56, 81-84, 101-106) are hingedly connected to one another and at least one cyclically closed coupling gear (21-24, 61-64, 90-93, 113-116) is formed which allows relative movement of the polygon components parallel to the main plane, and the polygon components are arranged in the coupling mechanism at least during an intermediate state between the first and the second end state in at least two plane positions (15, 16) at respective different heights relative to the main plane, **characterized by** at least one arm component (71, 72, 73) which forms a component of a cyclically closed coupling mechanism, wherein it is hingedly connected to two of the polygon components in each case and is also movable only parallel to the main plane, wherein the at least one arm component is concealed in each of the two end positions (5a, Sb) by the respective surface shape, namely is not visible when viewed perpendicularly to the main plane on a front side of the device, or, in that the polygon components (81, 84, 101, 106) are at least partly articulated and at least partially connected to each other by magnets (85, 107).

**2.** Device according to claim 1, **characterized in that** at least two of the polygon components (11, 14; 12, 13; 51, 52; 53, 54; 55, 56; 81, 82; 83, 84; 103, 104; 105, 106) are movable past each other in different plane positions (15; 16; 57; 58; 59).

**3.** A device according to claim 1 or 2, **characterised in that** the first and second polygons are mutually different regular polygons.

**4.** Device according to one of the preceding claims, **characterized in that** the polygon components (11-14, 51-56) are connected to each other exclusively via hinge joints (21-24, 61-66) are connected to each other.

**5.** Device according to claim 1, **characterised in that** the at least one arm component (71, 72, 73) is also formed as a plate-like component oriented parallel to the main plane.

**6.** Device according to any one of claims 1 to 5, **characterized in that** the polygon components (81-84, 101-106) in the two end states (80a, 80b, 100a, 100b) are arranged in a single plane position in the main plane.

**7.** Device according to claim 6, **characterized in that** during the transition from one end state to the other end state, it adopts an intermediate state in which at least one of the polygon components (81-84, 101-106) is displaced to a second plane position which has a different height relative to the main plane.

**8.** Device according to claim 7, **characterised in that** the displacement of the polygon component (81-84, 101-106) into the second plane position is effected by means of the coupling gear (90-93). is effected by means of the coupling gear (90-93).

**9.** Device according to any one of claims 1 to 5, **characterised in that** all polygon components (11-14, 51-56) are articulated to one another and are permanently arranged in two or more plane positions (15, 16), each at a different height relative to the main plane.

**10.** Device according to any of claims 1 to 5, **characterised in that** the polygon components connected in the coupling gear are movable relative to each other only parallel to the plane are movable relative to each other.

**Revendications**

**1.** Dispositif (10, 50, 80, 100) pour effectuer une décomposition de surface polygonale, le dispositif étant mobile entre un premier état final (1a, 5a, 80a, 100a) dans lequel le dispositif prend la forme d'un premier polygone et un second état final (1b, Sb, 80b, 100b) dans lequel le dispositif prend la forme d'un second polygone d'aire égale au premier polygone, comprenant un certain nombre de composants polygonaux (11, 12, 13, 14 ; 51, 52, 53, 54, 55, 56 ; 81, 82, 83, 84 ; 101, 102, 103, 104, 105, 106) sous la forme de composants en forme de plaques, qui sont orientés dans un plan principal du dispositif ou parallèlement au plan principal du dispositif, les composants polygonaux (11-14, 51-56, 81-84, 101-106) étant disposés côte à côte sans chevauchement par rapport au plan principal dans chacun des deux états finaux (1a, 1b, 5a, Sb, 80a, 80b, 100a, 100b) et formant ensemble une forme de surface selon le premier ou le second polygone. la totalité ou au moins une partie prépondérante des composants polygonaux (11-14, 51-56, 81-84, 101-106) étant reliés entre eux de manière articulée et au moins un engrenage de couplage fermé de manière cyclique (21-24, 61-64, 90-93, 113-116) est formé, lequel permet un mouvement relatif des composants polygonaux parallèlement au plan principal, et les composants polygonaux sont disposés dans l'engrenage de couplage au moins pendant un état intermédiaire entre le premier et le deuxième état final dans au moins deux positions de plan (15, 16) à des hauteurs respectives différentes par rapport au plan principal, **caractérisé par** au moins un composant de bras (71, 72, 73) qui forme un composant d'un engrenage de couplage fermé de manière cyclique, il est relié de manière articulée à deux des composants polygonaux et peut également être déplacé uniquement parallèlement au plan principal, le au moins un composant de bras étant caché par la forme de surface respective dans chacune des deux positions d'extrémité (5a, Sb), à savoir qu'il n'est pas visible sur une face avant du dispositif en cas de vue perpendiculaire au plan principal, ou en ce que les composants polygonaux (81, 84, 101, 106) sont reliés entre eux au moins partiellement de manière articulée et au moins partiellement par des aimants (85, 107).

**2.** Dispositif selon la revendication 1, **caractérisé en ce qu'**au moins deux des composants polygonaux (11, 14 ; 12, 13 ; 51, 52 ; 53, 54 ; 55, 56 ; 81, 82 ; 83, 84 ; 103, 104 ; 105, 106) peuvent être déplacés l'un devant l'autre dans différentes positions de plan (15 ; 16 ; 57 ; 58 ; 59).

**3.** Dispositif selon la revendication 1 ou 2, **caractérisé en ce que** le premier et le deuxième polygones sont des polygones réguliers différents l'un de l'autre.

**4.** Dispositif selon l'une des revendications précédentes, **caractérisé en ce que** les composants polygonaux (11-14, 51-56) sont reliés exclusivement par des charnières (21-24, 61-66) sont reliées entre elles.

5. Dispositif selon la revendication 1, **caractérisé en ce que** ledit au moins un élément composant de bras (71, 72, 73) est également conçu comme un composant en forme de plaque, orienté parallèlement au plan principal.

6. Dispositif selon l'une quelconque des revendications 1 à 5, **caractérisé en ce que** les composants polygonaux (81-84, 101-106) sont disposés dans les deux états finaux (80a, 80b, 100a, 100b) dans une seule position de plan dans le plan principal.

7. Dispositif selon la revendication 6, **caractérisé en ce que**, pendant la transition d'un état final à l'autre état final, un état intermédiaire dans lequel au moins l'un des composants polygonaux (81-84, 101-106) est déplacé vers une deuxième position de plan qui présente une hauteur différente par rapport au plan principal.

8. Dispositif selon la revendication 7 **caractérisé en ce que** le déplacement de la au moins un composant polygonal (81-84, 101-106) dans la deuxième position de plan s'effectue au moyen de l'engrenage de couplage (90-93).

9. Dispositif selon l'une quelconque des revendications 1 à 5, **caractérisé en ce que** tous les composants polygonaux (11-14, 51-56) sont articulés entre eux et sont disposés de manière permanente dans deux ou plusieurs positions de plan (15, 16), chacune à une hauteur différente par rapport au plan principal.

10. Dispositif selon l'une des revendications 1 à 5, **caractérisé en ce que** les composants polygonaux reliés dans le mécanisme de couplage sont uniquement parallèles au plan vertical. Plan principal sont mobiles l'un par rapport à l'autre.

Fig. 1

Fig. 2

Fig. 3

Fig. 4

Fig.5

Fig. 6

Fig. 7

Fig. 8

EP 3 727 621 B1

Fig. 9

Fig. 10

Fig. 11

14

Fig. 13

Fig. 14

Fig. 12

Fig. 15

Fig. 16

Fig. 17

Fig.18

Fig.19

Fig. 20

Fig. 21

Fig. 22

Fig. 23

EP 3 727 621 B1

Fig. 24

Fig. 25
100
100a
105
114
102
104
104
103
106
115
116

Fig. 26

EP 3 727 621 B1

Fig. 27

Fig. 28

Fig. 29

Fig. 30

Fig. 31

Fig. 33

Fig. 32

Fig. 35

Fig. 34

Fig. 37

Fig. 36

Fig. 38

107

1006

Fig. 39

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1072295 A
- CN 101980322